# EUROPEAN PATENT APPLICATION

(11) **EP 2 699 049 A1**
(43) Date of publication of application: **19.02.2014**
(21) Application number: 12797073.9
(22) Date of filing: 11.05.2012
(51) Int. Cl.: H04W 84/10, H04W 92/12, H04W 92/20

(54) **BASE STATION DEVICE AND COMMUNICATION METHOD FOR BASE STATION DEVICE**

(30) Priority: 10.06.2011 JP 2011130348
(71) Applicant: Panasonic Corporation, Kadoma-shi, Osaka 571-8501 (JP)
(72) Inventor: KOIDE, Yasuo, Chuo-ku Osaka 540-6207 (JP)
(74) Representative: Grünecker, Kinkeldey, Stockmair & Schwanhäusser
(86) International application number: PCT/JP2012/003084
(87) International publication number: WO 2012/169113

(57) **Abstract**

In the present invention, a parent HeNB (100) is provided with: an operator network communication function unit (110) for communicating with an EPC, an HeMS, etc. of operator networks (20 and 30); an operator network proxy function unit (120) which operates as a proxy for an SeGW, an EPC, and an HeMS of the operator networks (20 and 30) for a clone HeNB (200); a parameter management function unit (130) for managing parameter information used for a clone HeNB (200); and an identifier conversion function unit (140) for converting identifiers of messages and user data when performing communication between the clone HeNB (200) and apparatuses of the operator networks (20 and 30). The clone HeNB (200) treats the parent HeNB (100) as an apparatus of the operator networks (20 and 30) in order to perform communication.

## Description

### Technical Field

The present invention relates to a base station apparatus and a communication method for a base station apparatus.

### Background Art

In recent years, small-cell base station apparatuses called HeNB (Home eNodeB) have been developed to cover dead zones in indoor areas for communication using cellular phones.

HeNBs are assumed to be used in homes, companies and shopping malls. In a case where an HeNB is installed, configuration information needs to be obtained by performing a registration process with a management apparatus (hereinafter, referred to as "HeMS") within the operator network at the time of start-up. Further, it is necessary to periodically exchange management information regarding an alarm and performance between the HeNB and HeMS other than the start-up time.

At the time of start-up, the HeNB needs to perform an S1 connection establishment in device level with a call control apparatus (hereinafter, referred to as "MME"). In order for a communication apparatus within a local network and a mobile station (hereinafter, referred to as "UE") to directly communicate with each other without passing through an operator network, 3GPP has been in the process of building a standard for Local IP Access (hereinafter, referred to as LIPA) functions in an HeNB.

The HeNB discovers an HeMS and performs a registration process at the time of start-up. Further, the HeNB establishes an S1 connection with the MME. After completing a registration with the HeMS, the HeNB acquires parameter information from the HeMS. Even after completing the start-up, the HeNB exchanges management information such as alarm report and performance information with the HeMS.

Methods disclosed in NPLs 1 to 3 have been known as such methods which perform a registration process with the HeMS within the operator network at the time of start-up and acquires necessary configuration information.

Hereinafter, terms and abbreviations used in this specification will be described.

EPC (Evolved Packet Core): refers to a generic term for operator network apparatuses. Included are MME, S-GW, HSS, and P-GW, for example.

HeMS (Home eNodeB Management System): an apparatus which performs management of HeNBs. The HeMS exchanges messages for managing apparatuses with the HeNBs.

HeNB (Home eNodeB): a small-cell base station having a small service area (cell), which is assumed to be used in homes and companies.

HSS (Home Subscriber Server): an apparatus which manages contract information and the like of UEs.

L-GW (Local Gateway): a gateway apparatus for an HeNB to connect with apparatuses within a Local Network. In 3GPP, it has been considered as an LIPA (Local IP Access) function.

MME (Mobility Management Entity): an apparatus which performs a call control of HeNBs. MME exchanges messages for a call control with the HeNBs.

P-GW(PDN Gateway): a gateway for operator networks to connect with a PDN (Public Domain Network).

SeGW (Security Gateway): a gateway that establishes an IPsec tunnel with an HeNB.

S-GW (Serving Gateway): a gateway for HeNBs to exchange user data with an operator network.

TR-069: a protocol used for communication between an HeNB and HeMS, which protocol has been defined by a Broad Band Forum.

A conventional start-up procedure of an HeNB is described below.

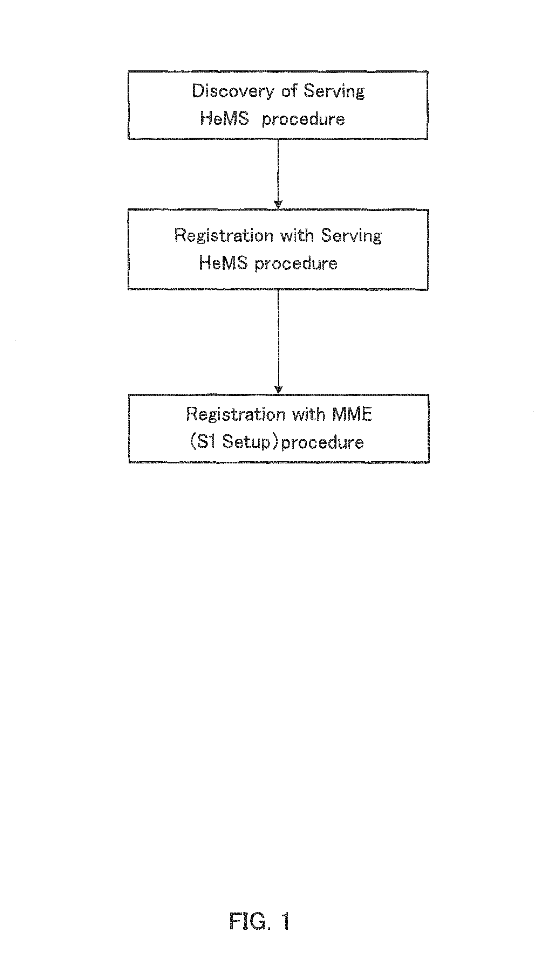

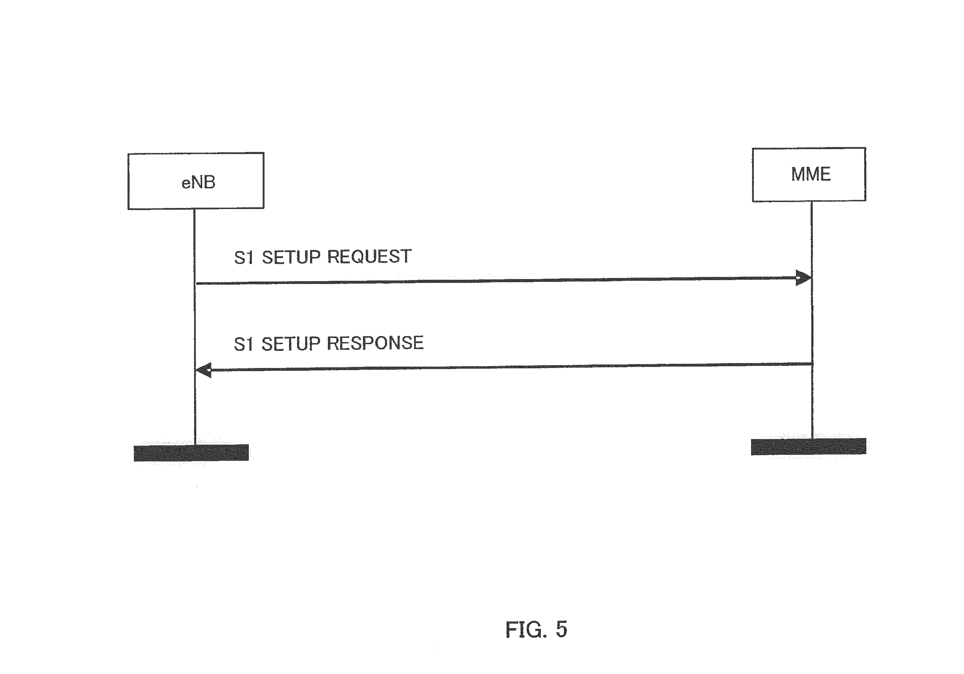

FIG. 1 is a diagram illustrating a conventional start-up procedure of an HeNB. FIG. 1 illustrates Discovery and registration procedures which are taken out from TS32.593 V10.0.0 (5.1.1 Figure 5-1).

As illustrated in FIG. 1, first, the HeNB performs a procedure for discovering a Serving HeMS in phase 1 (Discovery of Serving HeMS procedure).

Upon acquisition of an IP address of a Serving HeMS, the HeNB establishes an IP connection whose security is protected with the Serving HeMS.

Then, registration with the Serving HeMS is completed in phase 2 (Registration with Serving HeMS procedure).

Thereafter, the HeNB performs an S1 set-up procedure with an MME to establish a connection with the MME in device level in phase 3, (Registration with MME (S1 Setup) procedure). After completing the registration with the Serving HeMS, the HeNB performs a procedure for acquiring a configuration of the HeNB.

Here, a procedure for the HeNB to conduct a search for a Serving HeMS will be described.

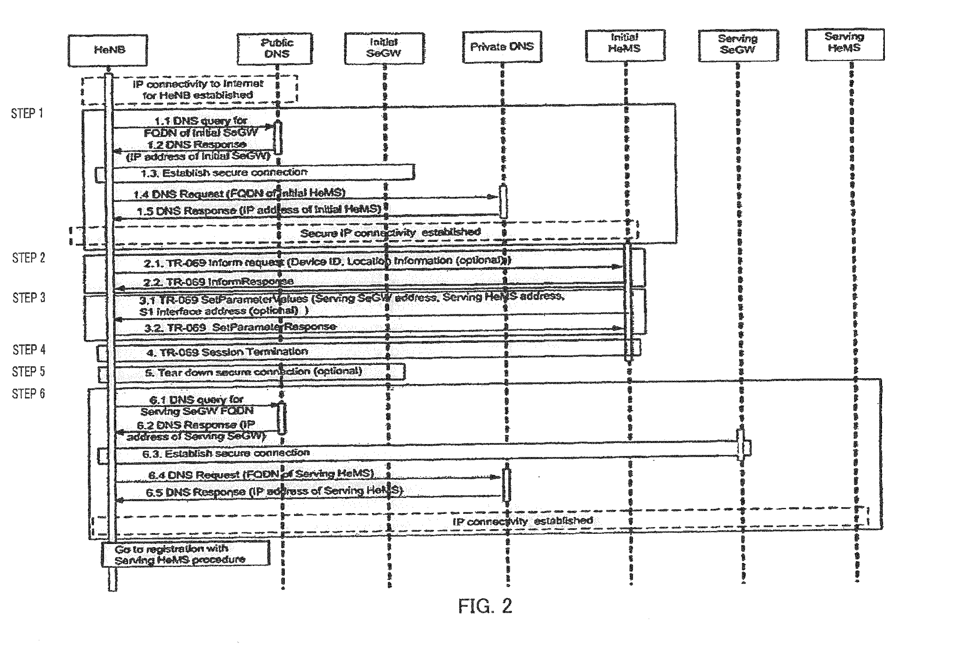

FIG. 2 is a diagram illustrating a conventional procedure for discovering a Serving HeMS. FIG. 2 illustrates Serving HeMS Discovery via Initial HeMS accessible inside an operator's private secure network domain, which is cited from TS32.593 V10.0.0 (5.1.2.2 Figure 5-2).

### <Step 1>

In Step 1, the HeNB establishes a secure connection with an Initial HeMS.

Step 1 has sequences 1.1 to 1.5.

(1.1) The HeNB initiates an operation of acquiring an IP address of an Initial SeGW. The HeNB transmits a DNS query for setting FQDN of Initial SeGW to a public DNS. The FQDN of the Initial SeGW is set in advance in the HeNB.

(1.2) The public DNS responds to the HeNB with the IP address of the Initial SeGW matching with the FQDN.

(1.3) A secure connection via IPsec tunnel is established between the HeNB and the Initial SeGW.

(1.4) The HeNB initiates an operation to acquire an IP address of the Initial HeMS. The HeNB transmits a DNS query for setting FQDN of the Initial HeMS to a private DNS. The FQDN of the Initial HeMS is set in advance in the HeNB.

(1.5) The private DNS responds to the HeNB with an IP address of the Initial HeMS matching with the FQDN.

### <Step 2>

In Step 2, the HeNB establishes a TR-069 session with the Initial HeMS.

Step 2 has sequences 2.1 and 2.2.

(2.1) The HeNB transmits Inform request containing Device ID and location information (option) of the HeNB to the Initial HeMS.

(2.2) When accepting the session request, the Initial HeMS returns an Inform Response as a response to the HeNB.

### <Step 3>

In Step 3, the Initial HeMS provides the HeNB with IP addresses of the Serving SeGW and the Serving HeMS.

### Step 3 has sequences 3.1 and 3.2.

(3.1) The Initial HeMS transmits SetParameterValues including IP addresses of the Serving SeGW and the Serving HeMS to the HeNB. At this stage, the Initial HeMS can simultaneously transmit an IP address of an S1 interface of the MME as an option.

(3.2) The HeNB returns a response to the Initial HeMS as SetParameterValuesResponse.

### <Step 4>

In Step 4, the HeNB releases the TR-069 session between the HeNB and Initial HeMS.

### <Step 5>

In Step 5, the HeNB tears down the IPsec tunnel with the Initial SeGW.

### <Step 6>

In Step 6, the HeNB establishes a secure connection with the Serving HeMS.

### Step 6 has sequences 6.1 to 6.5.

(6.1) If the IP address of the Serving SeGW has not been acquired yet (for example, FQDN is indicated instead of the IP address of the Serving SeGW in Step 3.1), the HeNB initiates an operation to acquire an IP address of the Serving SeGW. The HeNB transmits a DNS query for setting FQDN of the Serving SeGW to the public DNS. When the IP address of the Serving SeGW is already acquired, this sequence is skipped and sequence 6.3 is performed.

(6.2) The public DNS respond to the HeNB with the IP address of the Serving SeGW matching with the FQDN.

(6.3) A secure connection via IPsec tunnel is established between the HeNB and the Serving SeGW.

(6.4) If the IP address of the Serving HeMS has not been acquired yet (for example, FQDN is notified instead of the IP address of the Serving HeMS in sequence (3.1)), the HeNB initiates an operation to acquire the IP address of the Serving HeMS. The HeNB transmits a DNS query for setting FQDN of the Serving HeMS to the public DNS. When the IP address of the Serving HeMS is already acquired, the above sequence (6.4) and the below sequence (6.5) are skipped.

(6.5) The private DNS responds to the HeNB with the IP address of the Serving HeMS matching with the FQDN.

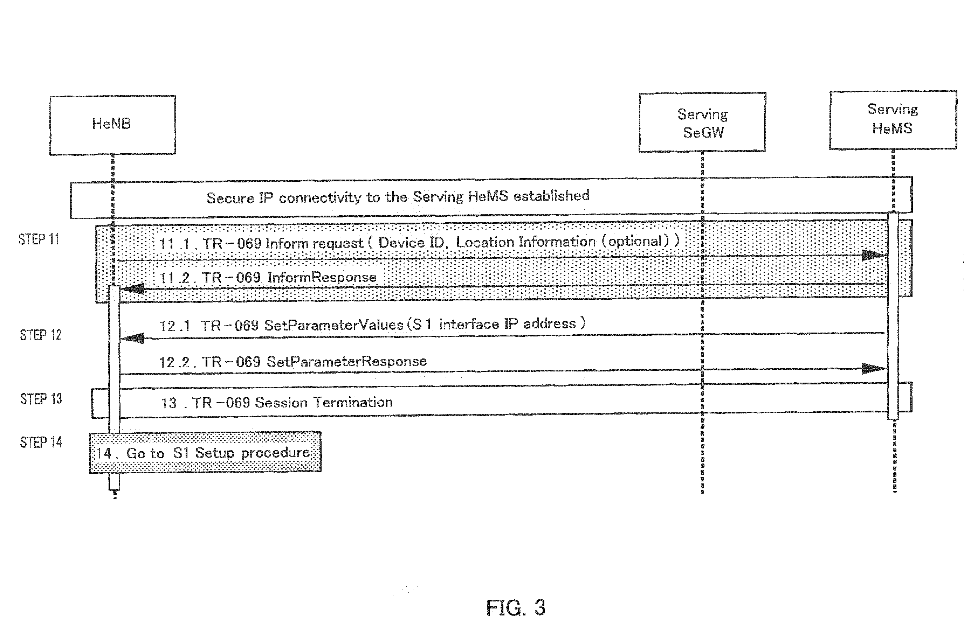

FIG. 3 is a diagram illustrating a conventional procedure in which the HeNB performs a registration with the Serving HeMS. FIG. 3 illustrates Procedure for HeNB registration with Serving HeMS which is cited from TS32.593 V10.0.0 (5.1.3 Figure 5-4).

In this procedure, the HeNB needs to complete searching for a Serving HeMS in advance and to establish a secure IP connection with the Serving HeMS.

### <Step 11>

In Step 11, the HeNB establishes a TR-069 session with the Serving HeMS.

Step 11 has Steps 11.1 and 11.2.

(11.1) The HeNB transmits an Inform request including Device ID and position information (optional) of the HeNB to the Serving HeMS.

(11.2) If the Serving HeMS accepts the session, it returns InformResponse as a response to the HeMS.

### <Step 12>

In Step 12, the Serving HeMS provides the HeNB with the IP address of S1 interface of the MME.

Step 12 has sequences 12.1 and 12.2.

(12.1) The Serving HeMS transmits SetParameterValues including the IP address of the S1 interface of the MME to the HeNB.

(12.2) The HeNB returns SetParameterValuesResponse to the Serving HeMS.

### <Step 13>

In Step 13, the HeNB tears down the TR-069 session with the Serving HeMS.

### <Step 14>

In Step 14, the HeNB initiates an S1 Setup procedure.

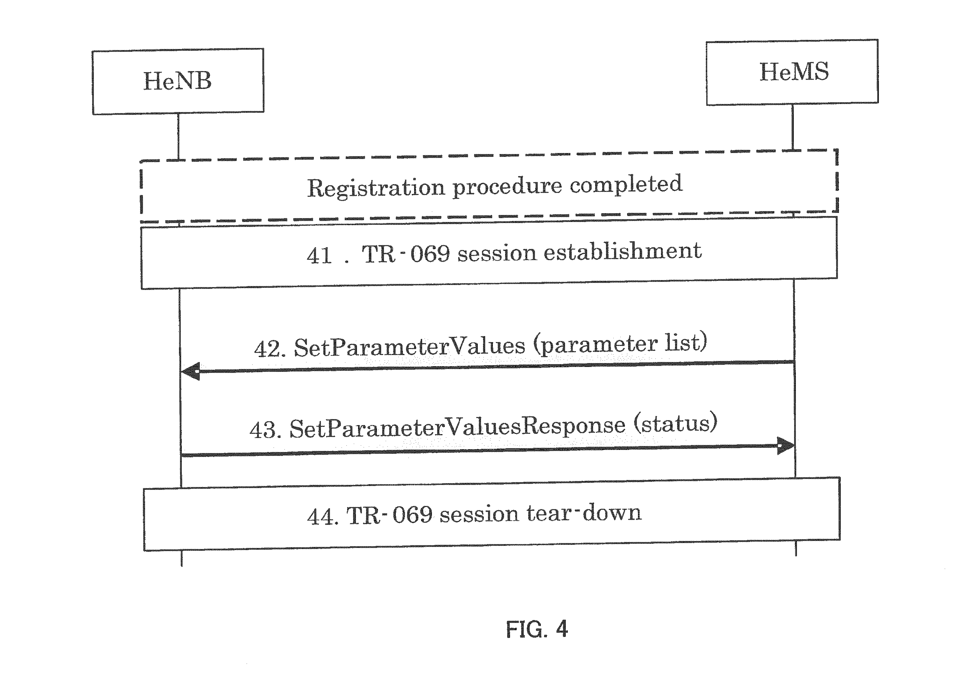

FIG. 4 is a diagram illustrating a conventional procedure in which the HeNB acquires a configuration. FIG. 4 illustrates an HeNB configuration procedure using an RPC SetParameterValues method which is cited from TS32.593 V10.0.0(5.2.3 Figure 5-6).

In Step 41, a TR-069 session is established between the HeNB and the HeMS (TR-069 session establishment).

In Step 42, the HeMS transmits SetParameterValues including a Parameter list to the HeNB (SetParameterValues (parameter list)).

In Step 43, the HeNB transmits SetParameterValuesResponse including status information as a response to the HeMS (SetParameterValuesResponse (status)).

In Step 44, the TR-069 session is torn down (TR-069 session tear-down).

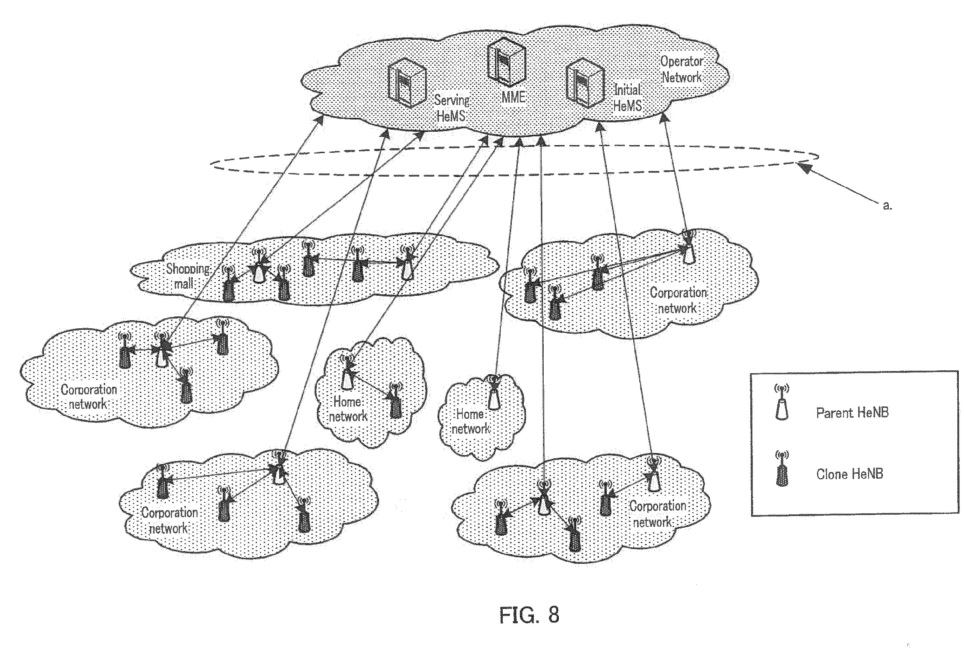

FIG. 5 is a diagram illustrating a conventional S1 setup procedure in which the HeNB establishes a connection with the MME in device level. FIG. 5 illustrates an S1 Setup procedure: Successful Operation which is cited from TS36.413 V10.0.1 (8.7.3.2 Figure 8.7.3.2-1).

Upon acquisition of the IP address of the MME and completion of a registration to the Serving HeMS, this procedure is performed as an initial S1AP procedure. In addition,

FIG. 5 illustrates a case of an eNB, but the same procedure is applied to a case of the HeNB.

As illustrated in FIG. 5, the eNB transmits S1 SETUP REQUEST including data for establishing a TNL (TNL: Transport Network Layer) association to the MME. The MME transmits an S1 SETUP RESPONSE including data for establishing TNL association to the eNB. The exchanged data is held in the eNB and the MME and used for the TNL association.

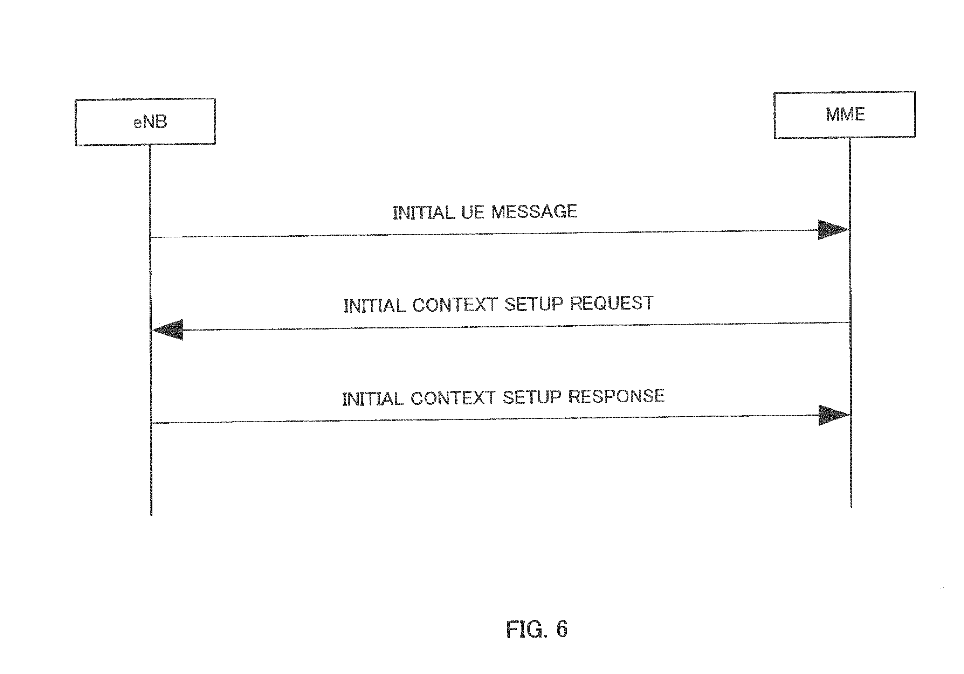

FIG. 6 is a diagram illustrating a conventional procedure of Initial Context Setup. FIG. 6 illustrates Initial Context Setup Procedure based on TS36.300 V10.2.0 (19.2.2.3 Figure 19.2.2.3-1). In addition, FIG. 6 illustrates a case of the eNB, but the same procedure is applied to a case of the HeNB.

When the UE transitions from an idle state to an active state, as illustrated in FIG. 6, the eNB transmits an INITIAL UE MESSAGE to the MME. Thus, the MME transmits an INITIAL CONTEXT SETUP REQUEST and initiates an Initial Context Setup procedure.

According to the present procedure, information necessary for transmission and reception of user data is exchanged between the eNB and the MME.

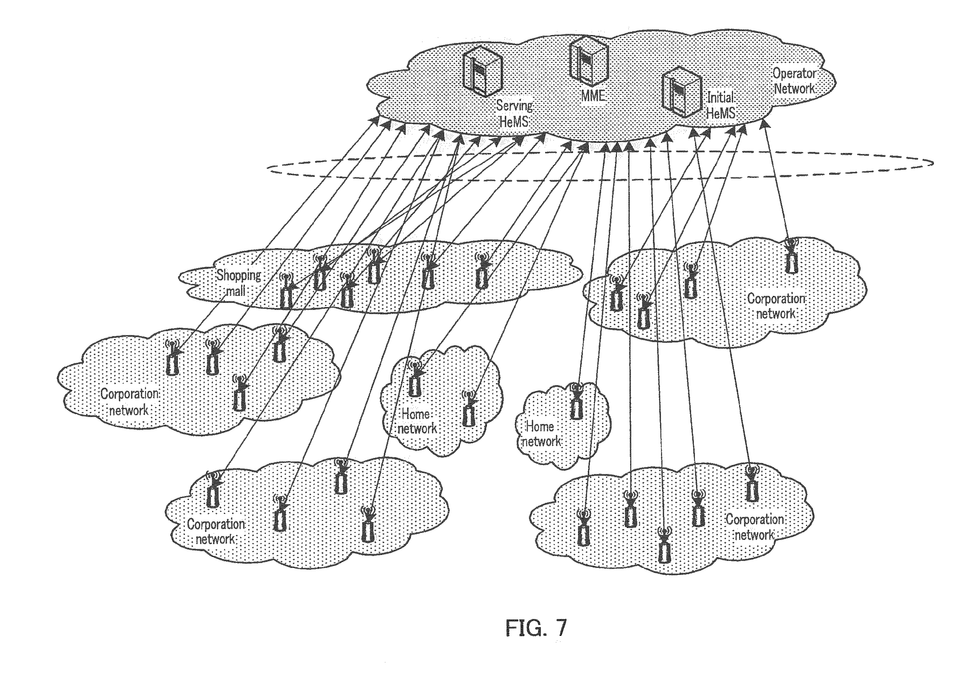

FIG. 7 is a diagram describing conventional message transmission.

As illustrated using a broken line in FIG. 7, an increase in the number of HeNBs causes an increase in the message processing loads which need to be processed in the operator network.

### Citation List

### Non-Patent Literature

NPL1
   3GPP TS32.593 V10.0.0 (Section 5, Procedure Flows)
NPL 2
   3GPP TS36.413 V10.0.1 (Section 8.7.3, S1 Setup)
NPL 3
   3GPP TS36.300 V10.2.0 (Section 19.2.2.3, Initial Context Setup procedure)

### Summary of Invention

### Technical Problem

However, the conventional start-up procedure of the HeNB has a problem in that the number of messages which need to be processed in the operator network increases with an increase in the number of HeNBs.

Specifically, there are the following problems.

(1) The HeNB exchanges a message for registration and configuration acquisition with the Initial HeMS / Serving HeMS within the operator network at the time of start-up. Also, a message for S1 setup is exchanged with the MME. Message exchanges occur with the HeMS and the MME at any other time than the set-up time.

(2) The number of messages which need to be processed in the operator network increases in proportion to the increase in the number of HeNBs, resulting in an increase in the processing loads therefor.

(3) The increase in the message processing loads requires the operator to make an equipment invest for installing more equipment and increasing the bands of the network lines.

(4) The HeMS needs to register HeNB information in advance, so that an increase in the number of HeNBs leads to an increase in maintenance burden of the operator.

An object of the present invention is to provide a base station apparatus and a communication method for a base station apparatus which are capable of reducing the number of messages exchanged between an HeNB within a local network and an operator network apparatus.

### Solution to Problem

A base station apparatus according to an aspect of the invention is provided in a local network and includes: an operator network communication section that communicates with an operator network apparatus; an operator network proxy section that performs communication as a proxy for the operator network apparatus for another base station apparatus provided in the local network; and a parameter management section that manages parameter information used for the other base station apparatus, among parameter information acquired by the operator network communication section, in which the operator network proxy section generates a message on a per-apparatus basis to the other base station apparatus, using the parameter information managed by the parameter management section and transmits the message to the other base station apparatus.

A communication method for a base station apparatus according to another aspect of the present invention is a communication method for a base station apparatus provided in a local network and configured to perform communication with an operator network apparatus, the method including: acquiring a parameter through the communication; and performing a proxy operation for an operator network apparatus with respect to another base station apparatus, using the parameter.

### Advantageous Effects of Invention

According to the present invention, it is possible to reduce the number of messages exchanged between an HeNB within a local network and an operator network apparatus.

### Brief Description of Drawings

FIG. 1 is a diagram illustrating a conventional start-up procedure of an HeNB;
FIG. 2 is a diagram illustrating a conventional procedure for discovering a Serving HeMS;
FIG. 3 is a diagram illustrating a conventional procedure in which the HeNB performs a registration with the Serving HeMS;
FIG. 4 is a diagram illustrating a conventional procedure in which the HeNB acquires configuration information;
FIG. 5 is a diagram illustrating a conventional S1 setup procedure in which the HeNB establishes a connection with the MME in device level;
FIG. 6 is a diagram illustrating a conventional procedure of Initial Context Setup;
FIG. 7 is a diagram describing conventional message transmission;
FIG. 8 is a diagram describing message transmission according to the present invention;
FIG. 9 is a block diagram illustrating a peripheral system including a base station apparatus according to an embodiment of the present invention;
FIG. 10 is a diagram illustrating a control sequence of a start-up procedure of the base station apparatus according to the embodiment;
FIG. 11 is a diagram illustrating a control sequence of an Initial Context Setup procedure of the base station apparatus according to the embodiment;
FIG. 12 is a diagram illustrating a control sequence of the Initial Context Setup procedure of the base station apparatus according to the embodiment; and
FIG. 13 is a diagram illustrating a control sequence of the Initial Context Setup procedure of the base station apparatus according to the embodiment.

### Description of Embodiment

Hereinafter, an embodiment of the present invention will be described in detail with reference to drawings.

### (Description of Principle)

A basic concept of the present invention will be described.

In the present invention, when a plurality of HeNBs are installed in home networks, corporation networks, and shopping malls (hereinafter, referred to as local networks), one or a plurality of HeNBs connected to the operator network are each regarded as a Parent HeNB (base station apparatus), and other HeNBs are each caused to operate as a Clone HeNB (another base station apparatus) configured to copy and use parameters acquired by the Parent HeNB from the operator network. In this manner, the number of messages exchanged between the HeNB and the operator network apparatus is reduced.

FIG. 8 is a diagram for describing message transmission according to the present invention.

Among the HeNBs installed in the local network, an HeNB which directly communicates with operator network apparatuses (an HeMS, MME, and the like) is regarded as "Parent HeNB." HeNBs other than the Parent HeNB copy necessary parameters from the Parent HeNB and perform service. These HeNBs are regarded as "Clone HeNBs."

The Clone HeNB regards the Parent HeNB as the operator network apparatus and performs communication. The transmission of messages of the Clone HeNB for registration to the HeMS and S1 set-up with the MME is terminated in the Parent HeNB, so the messages are not forwarded to the operator network.

Thus, even when the number of the Clone HeNBs increases, the number of messages with respect to the operator network does not increase, so that the processing load in the operator network apparatus does not increase either. In other words, as illustrated in the area denoted by reference sign "a." in FIG. 8, the transmission of messages of the Clone HeNBs is terminated in a corresponding one of the Parent HeNBs, and the messages are not transmitted to the Operator Network, which in turn reduces the message processing load in the operator network.

Further, the Clone HeNBs are not recognized by the operator network, so that the operator does not have to perform a management operation for the Clone HeNBs.

### (Embodiment)

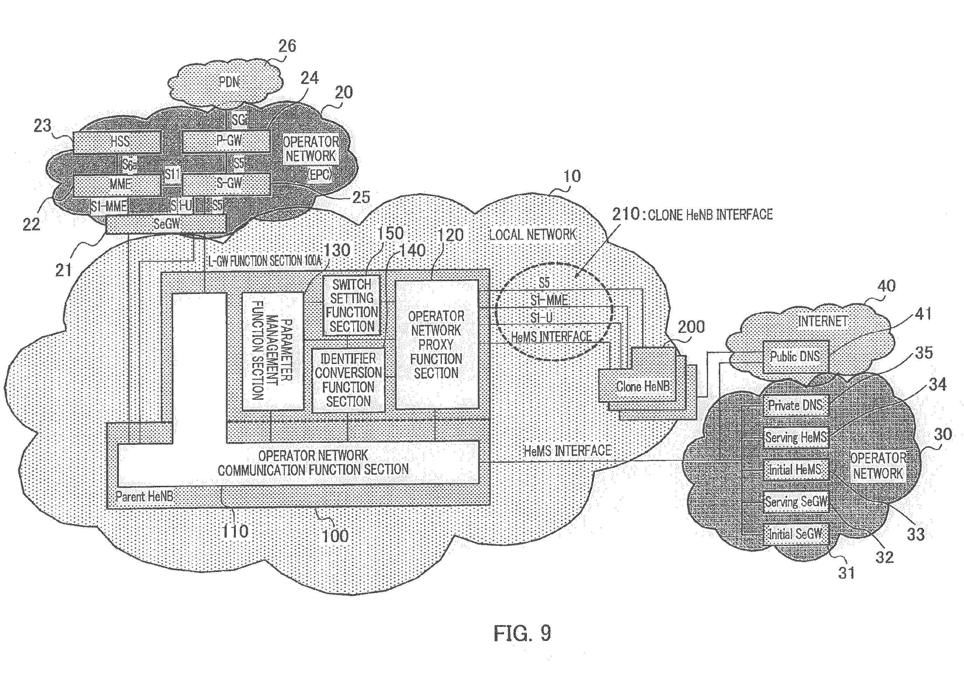

FIG. 9 is a block diagram illustrating a peripheral system including a base station apparatus according to an embodiment of the present invention, based on the basic concept described above.

As illustrated in FIG. 9, operator networks 20 and 30, PDN 26 through operator network 20, and internet 40 are connected to local network 10.

Parent HeNB 100 which directly communicates with apparatuses (an HeMS, MME, and the like) in operator networks 20 and 30 is installed in local network 10. In addition, Clone HeNB 200 which copies necessary parameters from Parent HeNB 100 and provides service is installed in local network 10.

Parent HeNB 100 and Clone HeNB 200 are connected to each other via Clone HeNB interface 210 including S5, S1-MME, S1-U, and an HeMS interface.

Clone HeNB 200 regards Parent HeNB 100 as an apparatus in operator networks 20 and 30 and performs communication. The transmission of messages of Clone HeNB 200 for registration to the HeMS and S1 set-up with the MME is terminated in Parent HeNB 100, and the messages are not forwarded to operator networks 20 and 30.

SeGW 21, MME 22, HSS 23, P-GW 24, and S-GW25 are installed in operator network 20.

Initial SeGW 31, Serving SeGW 32, Initial HeMS 33, Serving HeMS 34, and Private DNS 35 are installed in operator network 30. Local network 10 and operator network 30 are connected to each other via the HeMS interface.

For example, Public DNS 41 is installed in Internet 40.

An overview of FIG. 9 is as follows.
(1) An HeNB that directly communicates with operator networks 20 and 30 is Parent HeNB 100. A plurality of Parent HeNBs 100 may be installed depending on the amount of traffic with operator networks 20 and 30.
(2) When a new HeNB other than Parent is installed in local network 10 and is activated, Parent HeNB 100 operates as a proxy for an HeMS and EPC with respect to the new HeNB. Further, when it is necessary to use IPsec in the new HeNB, Parent HeNB 100 operates as a proxy for the SeGW.
(3) In the configuration described in (2), Parent HeNB 100 may communicate with the new HeNB other than Parent using an interface for a local network of L-GW defined in 3GPP.
(4) In the configuration described in (2), Parent HeNB 100 sets parameters with respect to the new HeNB other than Parent using parameters acquired from the HeMS and EPC of the operator network. The HeNB other than Parent for which Parent HeNB 100 sets the parameters is regarded as Clone HeNB 200. Clone HeNB 200 operates by the same parameters as those of Parent HeNB 100.
(5) In the configuration described in (4), parameters for Clone HeNB 200 which are set by Parent HeNB 100 can be optionally changed.
(6) The transmission of messages from Clone HeNB 200 on a per-apparatus basis is terminated in Parent HeNB 100, and the messages are not transmitted to operator networks 20 and 30.
(7) A manager of local network 10 registers with Parent HeNB 100, Device ID information of Clone HeNB 200 which is allowed to be installed.
(8) The manager of local network 10 registers with Parent HeNB 100, information of installable position of Clone HeNB 200 with respect to Clone HeNB 200 which is allowed to be installed.
(9) Parent HeNB 100 performs confirmation of Device ID information and position information at the time of registration processing of Clone HeNB 200, and does not allow service initiation when the Device ID information and the position information are different from registration information in the above (7) and (8). However, service initiation can be allowed without performing a confirmation operation.
(10) Upon reception of S1 and S5 messages and user data on a per-UE basis from Clone HeNB 200, Parent HeNB 100 changes an ID value used between Clone HeNB 200 and Parent HeNB 100 within a message to an ID value used between the Parent HeNB and an EPC, and then transmits the changed ID value to MME 22 and S-GW 25.
(11) Upon reception of S1 and S5 messages and user data on a per-UE basis from MME 22 and S-GW 25, Parent HeNB 100 checks an ID value. When the ID value is an ID value associated with the UE served by Clone HeNB 200, Parent HeNB 100 changes the ID value used between the EPC and Parent HeNB 100 to the ID value used between Parent HeNB 100 and Clone HeNB 200, and then transmits the changed ID value to Clone HeNB 200.
(12) When initialization is instructed from MME 22 or the HeMS, Parent HeNB 100 performs initialization of Clone HeNB200 connected to Parent HeNB 100.
(13) A Parent HeNB function performs an operation only when enabled by the Parent HeNB function switch, and does not perform as Parent HeNB 100 when disabled by the Parent HeNB function switch.

A brief overview has been described above.

Functional blocks of Parent HeNB 100 will be described, next.

Parent HeNB 100 includes operator network communication function section 110, operator network proxy function section 120, parameter management function section 130, identifier conversion function section 140, and switch setting function section 150.

The functions of identifier conversion function section 140, parameter management function section 130, and operator network proxy function section 120 can be enabled or disabled.

In the present embodiment, an HeNB includes L-GW (Local Gateway) function section 100A for LIPA (Local IP Access) functions. The additional functions for realizing the present communication method are components disposed in L-GW function section 100A except for operator network communication function section 110. When the HeNB does not include L-GW function section 100A, the additional functions may be disposed in a main body of the HeNB.

Since Clone HeNB 200 operates without recognizing itself as a Clone, the additional functions are not necessary.

### [Operator network communication function section 110]

Operator network communication function section 110 is installed in local network 10 and communicates with apparatuses in operator networks 20 and 30.

Operator network communication function section 110 converts a message from the base station apparatus to a message addressed to apparatuses in operator networks 20 and 30 and transmits the converted message to the apparatuses in operator networks 20 and 30.

Operator network communication function section 110 forwards a message and user data addressed to the user served by another base station apparatus among messages and user data received from the apparatuses in operator networks 20 and 30 to identifier conversion function section 140.

Upon reception of a message for instructing initialization and stopping of service of the base station apparatus from an apparatus in operator networks 20 and 30, operator network communication function section 110 instructs operator network proxy function section 120 to generate a message for instructing all other base station apparatuses to perform initialization and stopping of service.

Specifically, the process is as follows.

Operator network communication function section 110 includes an interface through which communication is performed with the EPC and the HeMS, and performs communication with the EPC and the HeMS.

When the ID value of a message and user data on a per-UE basis received from the EPC is an ID value for Clone HeNB 200, operator network communication function section 110 forwards the ID value to identifier conversion function section 140. When the message is on a per-apparatus basis or the ID value of a message and user data on a per-UE basis is not the ID value for Clone HeNB 200, operator network communication function section 110 does not forward the ID value and terminates the process.

Here, the message on a per-UE basis is a message for performing setting and control for each UE. The ID value for each UE is included in the message in order to identify a UE from which a message is transmitted. In addition, the message on a per-apparatus basis is a message for performing setting and control for each HeNB (Parent HeNB 100 and Clone HeNB 200).

When a message received from the EPC is an initialization instruction for Parent eNB100, operator network communication function section 110 notifies operator network proxy function section 120 of an instruction for transmitting the initialization message to all Clone eNBs.

Operator network communication function section 110 forwards a message and user data which are received from identifier conversion function section 140 to the EPC.

Operator network communication function section 110 notifies parameter management function section 130 of parameter information regarding control on a per-apparatus basis to be used in setting for Clone HeNB 200 in the message received from the EPC.

Upon receipt of a request for allocation of an un-used ID value from identifier conversion function section 140, operator network communication function section 110 searches for an ID value which is not used at that time, and notifies identifier conversion function section 140 of the searched ID value.

Operator network communication function section 110 includes an interface through to communicate with the HeMS, processes a message received from the HeMS and notifies parameter management function section 130 of parameter information to be used in setting of Clone HeNB 200.

When the message received from the HeMS indicates an instruction for stopping of service and initialization for Parent eNB 100, operator network communication function section 110 notifies operator network proxy function section 120 of an instruction for transmitting the message indicating stopping of service, and initialization to all Clone eNBs.

Operator network communication function section 110 performs conversion of the source and destination addresses of an IP header.

### [Operator network proxy function section 120]

Operator network proxy function section 120 performs communication as proxies of apparatuses in operator networks 20 and 30 for another base station apparatus installed in local network 10.

Operator network proxy function section 120 generates a message on a per-apparatus basis to another base station apparatus and transmits the message to the other base station apparatus, by using parameter information managed by parameter management function section 130. Operator network proxy function section 120 terminates transmission of the message on a per-apparatus basis among messages and user data which are received from another base station apparatus, and when a reply is requested, generates a message and transmits the message to the other base station apparatus.

Further, operator network proxy function section 120 terminates transmission of a message for registration and set-up to an operator network apparatus of another base station apparatus, and does not forward the message to the operator network apparatus. Operator network proxy function section 120 can optionally set another base station apparatus allowed to provide service, and rejects service when another base station apparatus other than the other base station apparatus allowed to provide service requests service. Operator network proxy function section 120 can optionally set installable positions of another base station apparatus to be connected, and rejects the service when the other base station apparatus to be connected is located in a position other than the installable position.

Further, operator network proxy function section 120 forwards a message and user data on a per-user basis, among messages and user data which are received from the other base station apparatus to identifier conversion function section 140. Operator network proxy function section 120 converts a message and user data which are addressed to a user served by another base station apparatus to a message and user data which are addressed to the other base station apparatus from the base station apparatus, and transmits the converted message and the converted user data to the other base station apparatus. Operator network proxy function section 120 communicates with the other base station apparatus using a communication interface of a local network gateway provided in the base station apparatus.

Specifically, the process is as follows.

Operator network proxy function section 120 has an interface for communicating with Clone HeNB 200, operates as proxies of an SeGW, EPC, Initial SeGW, Serving SeGW, Private DNS and HeMS (Initial HeMS and Serving HeMS) in operator networks 20 and 30 for Clone HeNB 200.

Operator network proxy function section 120 serving as the proxies of the SeGW, Initial SeGW and Serving SeGW, establish a secure tunnel (IKE, IPsec, SSL/TLS, and the like) with Clone HeNB 200.

Operator network proxy function section 120, as the proxy for the EPC, performs a type determination of data received from Clone HeNB 200, and when the received data is a message or user data on a per-UE basis, forwards the message or the user data to identifier conversion function section 140. In case of a message on a per-apparatus basis, operator network proxy function section 120 terminates transmission of the message and performs processing according to the content of the message, and in case of performing a reply, acquires necessary parameter information from parameter management function section 130.

Operator network proxy function section 120, as the proxy for the EPC, transmits a message and user data which are forwarded from identifier conversion function section 140, to Clone HeNB 200.

Operator network proxy function section 120, as the proxy for the EPC, transmits a message to Clone HeNB 200 as necessary, upon notification from parameter management function section 130 that there was a change in parameters.

Operator network proxy function section 120, as the proxy for the HeMS, operates as a TR-69 Manager for Clone HeNB 200. When a message is transmitted to Clone HeNB 200, operator network proxy function section 120 acquires necessary parameter information from parameter management function section 130.

When a change in parameters is notified from parameter management function section 130, operator network proxy function section 120, as the proxy for the HeMS, transmits a message to Clone HeNB 200 as necessary.

Operator network proxy function section 120 provides an interface for setting an identifier of Clone HeNB 200 allowed to provide service by a manager of local network 10.

Operator network proxy function section 120 provides an interface for setting installation position information of Clone HeNB 200 allowed to provide service by a manager of local network 10.

Operator network proxy function section 120 performs a conversion of a destination address and a source address of an IP header.

Operator network proxy function section 120 performs the above operations, only when the function is enabled by switch setting function section 150.

### [Parameter management function section 130]

Parameter management function section 130 manages parameter information for another base station apparatus, among parameter information acquired by operator network communication function section 110. Parameter management function section 130 can optionally change parameter information.

Specifically, parameter management function section 130 holds parameter information for Clone HeNB 200 which is notified by operator network communication function section 110. The parameter information held therein is referenced by operator network proxy function section 120.

When a change occurs in the parameter information held therein, parameter management function section 130 notifies operator network proxy function section 120 of the change.

Parameter management function section 130 provides an interface through which a manager of local network 10 sets parameters for Clone HeNB 200.

Only when the function is enabled by switch setting function section 150, parameter management function section 130 performs the above operations.

### [Identifier conversion function section 140]

When communication is performed between another base station apparatus and the apparatuses in operator networks 20 and 30, identifier conversion function section 140 performs conversion of an identifier of a message and user data.

Identifier conversion function section 140 converts a user identifier of a message and user data on a per-user basis from a user identifier used between the base station apparatus and another base station apparatus to a user identifier used between the base station apparatus and apparatuses in operator networks 20 and 30, and forwards the converted user identifier to operator network communication function section 110.

Identifier conversion function section 140 converts a user identifier of a message and user data which are addressed to a user served by the other base station apparatus from a user identifier used between the base station apparatus and apparatuses in operator networks 20 and 30 to a user identifier used between the base station apparatus and another base station apparatus and forwards the converted user identifier to operator network proxy function section 120.

Specifically, the process is as follows.

Identifier conversion function section 140 holds an ID value between Clone HeNB 200 and Parent HeNB 100, an ID value between the EPC and Parent HeNB 100 and their association information.

Identifier conversion function section 140 converts an ID value of a message and user data which are received from operator network proxy function section 120 from the ID value used between Clone HeNB 200 and Parent HeNB 100 to the ID value used between Parent HeNB 100 and the EPC and forwards the converted ID value to operator network communication function section 110. In case of a message for performing a new connection establishment, allocation of ID values used between Parent HeNB 100 and the EPC is not performed yet. In this case, a query of un-used ID value is made to operator network communication function section 110 and conversion is performed using the ID value to be notified through a reply to the query.

Identifier conversion function section 140 converts an ID value of a message and user data which are received from operator network communication function section 110 to the ID value used between Parent HeNB 100 and Clone HeNB 200 from the ID value used between the EPC and Parent HeNB 100, and forwards the converted ID value to operator network proxy function section 120.

Only when the function is enabled by switch setting function section 150, identifier conversion function section 140 performs the operations described above.

### [Switch setting function section 150]

When the HeNB operates as Parent HeNB 100, switch setting function section 150 notifies operator network proxy function section 120, parameter management function section 130, and identifier conversion function section 140 of an instruction to enable the function of Parent HeNB 100. When the HeNB operates as an apparatus other than Parent HeNB 100, switch setting function section 150 indicates an instruction to disable the function of Parent HeNB 100.

Hereinafter, a communication method for base station apparatus 100 configured as described above will be described.

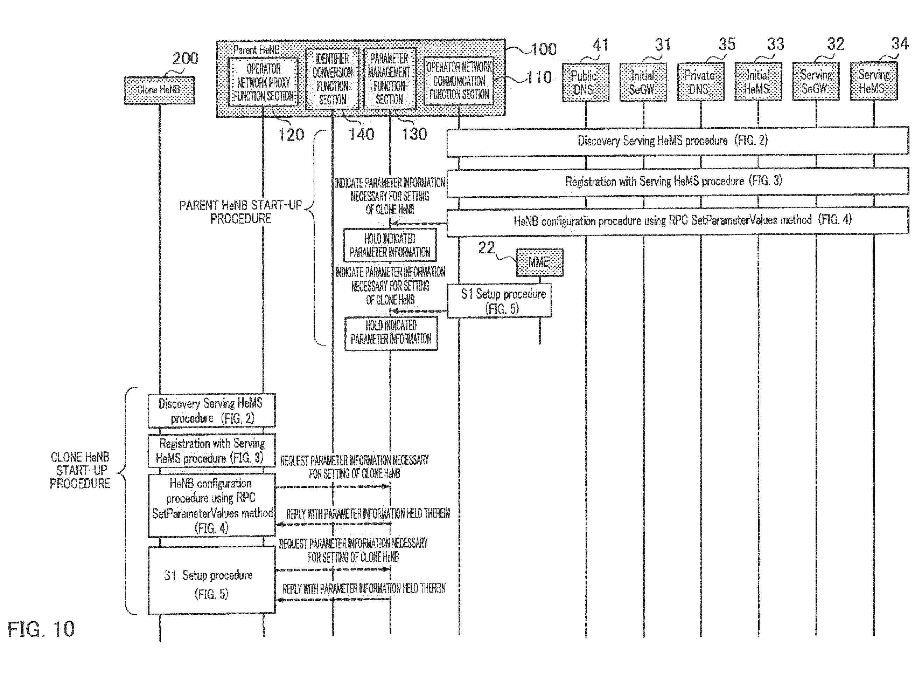

FIG. 10 is a diagram illustrating a control sequence of a start-up procedure.

As illustrated in FIG. 10, Parent HeNB 100 is connected to operator networks 20 and 30, but Clone HeNB 200 is not connected to operator networks 20 and 30. Clone HeNB 200 provides service by using parameters acquired by Parent HeNB 100 from operator networks 20 and 30.

In a start-up procedure of Parent HeNB 100, Parent HeNB 100 performs communication with apparatuses in operator networks 20 and 30. Specifically, operator network communication function section 110 performs the following procedures (1) to (3) with Initial SeGW 31, Serving SeGW 32, Initial HeMS 33, Serving HeMS 34, and Private DNS 35 in operation network 30 and Public DNS 41 in Internet 40. (1) Discovery Serving HeMS procedure (see FIG. 2), (2) Registration with Serving HeMS procedure (see FIG. 3), (3) HeNB configuration procedure using RPC SetParameterValues method (see FIG. 4). Otherwise, operator network communication function section 110 performs an S1 Setup procedure (see FIG. 5) with MME 22 in operator network 20.

Then, operator network communication function section 110 acquires parameter information necessary for setting Clone HeNB 200 and notifies parameter management function section 130 of the acquired parameter information, and parameter management function section 130 holds and manages the notified parameter information.

On the other hand, no messages are transmitted to operator networks 20 and 30 in a start-up procedure of Clone HeNB 200. Clone HeNB 200 is connected to Parent HeNB 100 through Clone HeNB interface 210, and Clone HeNB 200 provides service using parameters acquired by Parent HeNB 100 from operator networks 20 and 30. Specifically, operator network proxy function section 120 performs the following procedures with Clone HeNB 200: (1) Discovery Serving HeMS procedure (see FIG. 2), (2) Registration with Serving HeMS procedure (see FIG. 3), (3) HeNB configuration procedure using RPC SetParameterValues method (see FIG. 4), and (4) S1 Setup procedure (see FIG. 5).

Then, operator network proxy function section 120 requests parameter information necessary for setting of Clone HeNB 200 to parameter management function section 130, and parameter management function section 130 responds with the parameter information held therein.

As described above, no messages are transmitted to operator networks 20 and 30 in the start-up procedure of Clone HeNB 200. As a result, it is possible to reduce processing load of messages to be processed by apparatuses in operator networks 20 and 30.

In this communication method, when messages and user data on a per-UE basis are transmitted and received between Clone HeNB 200 and the EPC, Parent HeNB 100 needs to convert the ID value of the messages and the user data. As an example of this case, a case of Initial Context Setup procedure will be described.

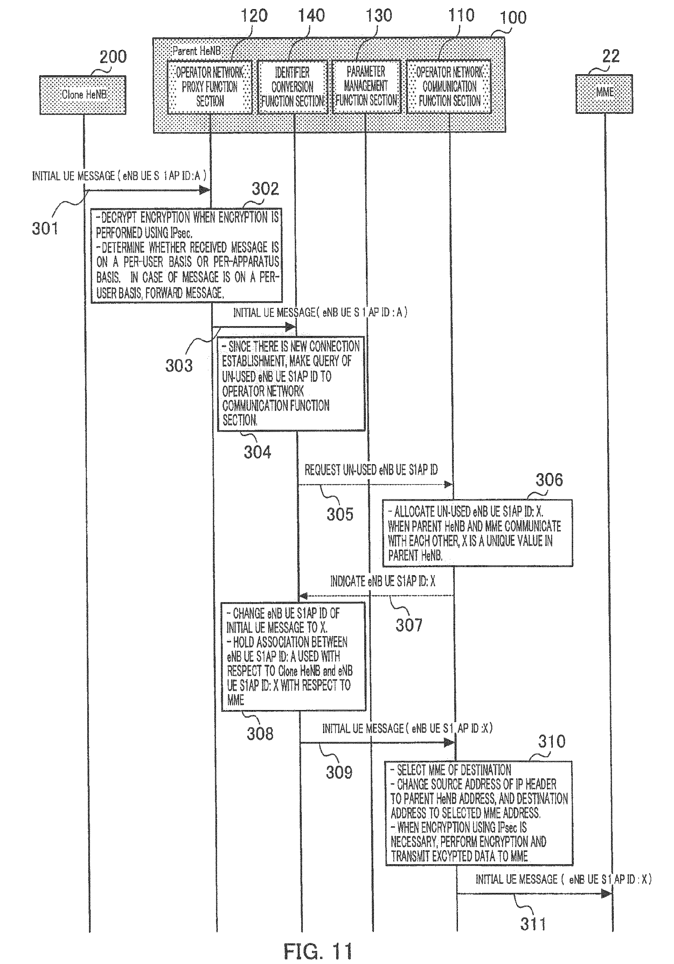

FIG. 11 to FIG. 13 are diagrams illustrating a control sequence of Initial Context Setup procedure. The Initial Context Setup procedure is divided into three parts, and the three parts are respectively described in FIG. 11 to FIG. 13 due to limited space for description.

As illustrated in FIG. 11, in the Initial Context Setup procedure, Clone HeNB 200 issues INITIAL UE MESSAGE (eNB UE S1AP ID: A) to operator network proxy function section 120 of Parent HeNB 100 (see reference numeral 301).

Operator network proxy function section 120 decrypts encrypted data, when encryption is applied by IPsec. Operator network proxy function section 120 determines whether the received message is a message on a per-user basis or per-apparatus basis (see reference numeral 302).

When the received message is on a per-user basis, operator network proxy function section 120 forwards INITIAL UE MESSAGE (eNB UE S1AP ID:A) to identifier conversion function section 140 (see reference numeral 303).

Since there is a new connection establishment, identifier conversion function section 140 makes a query of un-used eNB UE S1AP ID to operator network communication function section 110 (see reference numeral 304). Specifically, identifier conversion function section 140 requests un-used eNB UE S1AP ID from operator network communication function section 110 (see reference numeral 305).

Operator network communication function section 110 performs allocation of the un-used eNB UE S1AP ID: X (see reference numeral 306). X is a value that becomes unique in Parent HeNB 100 when HeNB 100 communicates with MME 22.

Operator network communication function section 110 notifies identifier conversion function section 140 of eNB UE S1AP ID:X (see reference numeral 307).

Identifier conversion function section 140 changes eNB UE S1AP ID of INITIAL UE MESSAGE to X (see reference numeral 308). Identifier conversion function section 140 holds association between eNB UE S1AP ID: A used for Clone HeNB and eNB UE S1AP ID: X used for MME 22 (see reference numeral 308).

Identifier conversion function section 140 transmits INITIAL UE MESSAGE (eNB UE S1AP ID:X) to operator network communication function section 110 (see reference numeral 309).

Operator network communication function section 110 selects MME 22 of a destination (see reference numeral 310). Operator network communication function section 110 respectively changes the source address of IP header to the address of Parent HeNB, and the destination address to the address of the selected MME (see reference numeral 310).

When encryption of IPsec is necessary, operator network communication function section 110 performs encryption of IPsec and transmits the encrypted IPsec to MME 22 (see reference numeral 311).

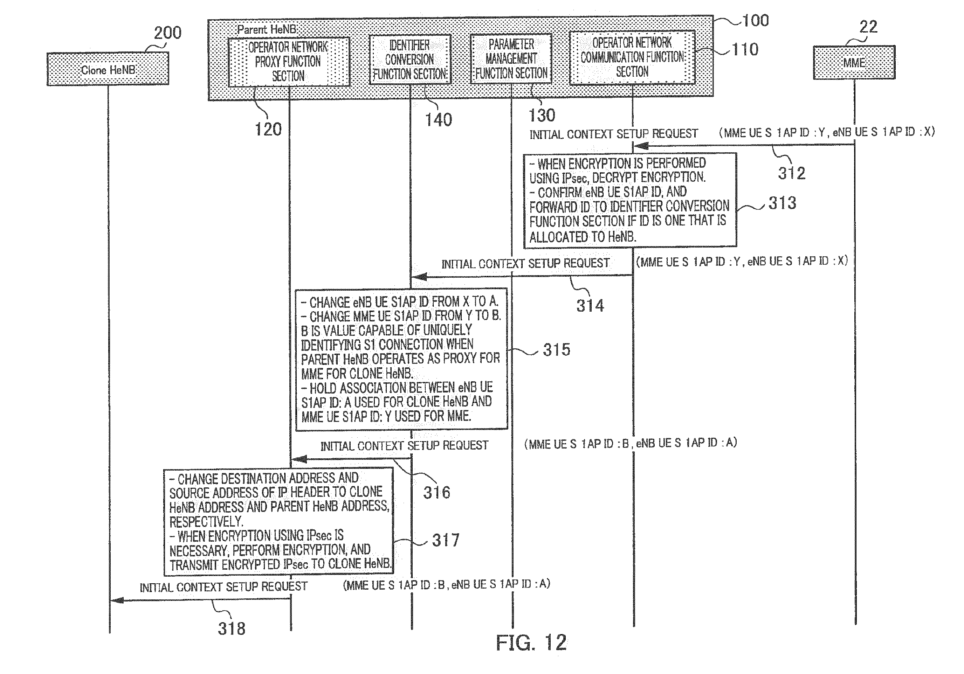

As illustrated in FIG. 12, MME 22 transmits INITIAL CONTEXT SETUP REQUEST (MME UE S1AP ID: Y, eNB UE S1AP ID: X) to operator network communication function section 110 (see reference numeral 312).

When encryption using IPsec has been performed, operator network communication function section 110 decrypts the encryption (see reference numeral 313). When it is confirmed that eNB UE S1AP ID is an ID allocated to Clone HeNB, operator network communication function section 110 forwards the ID to identifier conversion function section 140 (see reference numeral 314).

Identifier conversion function section 140 changes eNB UE S1AP ID from X to A (see number 315). Further, identifier conversion function section 140 changes MME UE S1AP ID from Y to B (see reference numeral 315). B is a value capable of uniquely identifying S1 connection when Parent HeNB operates as a proxy for the MME for Clone HeNB. Further, identifier conversion function section 140 holds an association of eNB UE S1AP ID: A used for the Clone HeNB and MME UE S1AP ID: Y used for the MME (see reference numeral 315).

Identifier conversion function section 140 transmits INITIAL CONTEXT SETUP REQUEST (MME UE S1AP ID: B, eNB UE S1AP ID: A) to operator network proxy function section 120 (see reference numeral 316).

Operator network proxy function section 120 changes a destination address and a source address of IP header to a Clone HeNB address and a Parent HeNB address, respectively (see reference numeral 317) When encryption using IPsec is necessary, operator network proxy function section 120 performs encryption, and transmits the encrypted IPsec to Clone HeNB 200 (see reference numeral 317).

Operator network proxy function section 120 transmits INITIAL CONTEXT SETUP REQUEST (MME UE S1AP ID: B, eNB UE S1AP ID: A) to Clone HeNB 200 (see reference numeral 318).

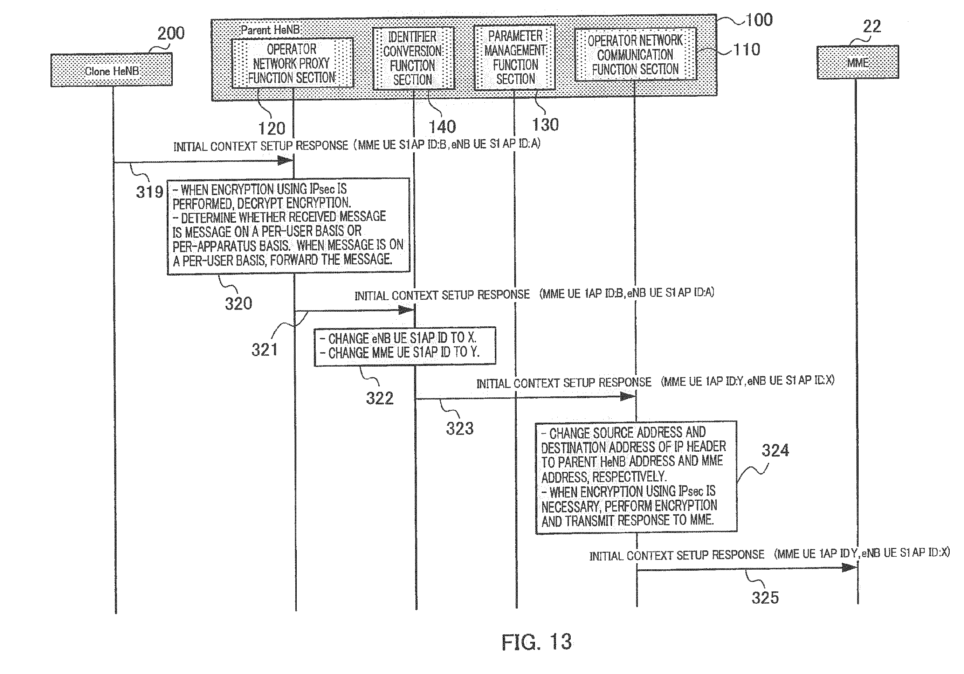

As illustrated in FIG. 13, Clone HeNB 200 responds to operator network proxy function section 120 of Parent HeNB 100 with INITIAL CONTEXT SETUP RESPONSE (MME UE S1AP ID: B, eNB UE S1AP ID: A) (see reference numeral 319).

When encryption using IPsec is performed, operator network proxy function section 120 decrypts the encryption (see reference numeral 320). Operator network proxy function section 120 determines whether the received message is a message on a per-user basis or per-apparatus basis (see reference numeral 320).

When the message is on a per-user basis, operator network proxy function section 120 forwards INITIAL CONTEXT SETUP RESPONSE (MME UE S1AP ID: B, eNB UE S1AP ID: A) to identifier conversion function section 140 (see reference numeral 321).

Identifier conversion function section 140 changes eNB UE S1AP ID to X (see reference numeral 322). Identifier conversion function section 140 changes MME UE S1AP ID to Y (see reference numeral 322).

Identifier conversion function section 140 transmits INITIAL CONTEXT SETUP RESPONSE (MME UE S1AP ID: Y, eNB UE S1AP ID: X) to operator network communication function section 110 (see reference numeral 323).

Operator network communication function section 110 changes the source address and a destination address of IP HEADER to Parent HeNB address and MME address, respectively (see reference numeral 324).

When encryption using IPsec is necessary, operator network communication function section 110 performs encryption, and transmits INITIAL CONTEXT SETUP RESPONSE (MME UE S1AP ID: Y, eNB UE S1AP ID: X) to MME 22 (see reference numeral 325).

Initial Context Setup procedure has been described above.

As described above in detail, according to the present embodiment, Parent HeNB 100 which directly communicates with apparatuses (such as a HeMS, a MME) in operator networks 20 and 30, and Clone HeNB 200 which acquires necessary parameters from Parent HeNB 100 to provide service are installed in local network 10

Parent HeNB 100 includes operator network communication function section 110 which performs communication with apparatuses in operator networks 20 and 30 (for example, an EPC and a HeMS) and operator network proxy function section 120 which operates as proxies for an SeGW, EPC, Initial SeGW, Serving SeGW, Private DNS and HeMS (Initial HeMS and Serving HeMS) in operator networks 20 and 30 with respect to Clone HeNB 200. Further, parent HeNB 100 includes parameter management function section 130 which manages parameter information to be used with respect to Clone HeNB 200 among parameter information acquired in operator network communication function section 110, and identifier conversion function section 140 which performs conversion of an identifier of a message and user data when communication is performed between Clone HeNB 200 and apparatuses in operator networks 20 and 30.

Clone HeNB 200 regards Parent HeNB 100 as an apparatus in operator networks 20 and 30 and performs communication therewith. The transmission of messages of Clone HeNB 200 for registration to HeMS and S1 setup with an MME is terminated in Parent HeNB 100, and the messages are not forwarded to operator networks 20 and 30.

With the above configuration, Parent HeNB 100 generates a message on a per-apparatus basis to Clone HeNB200 by using parameter information acquired from apparatuses in operator networks 20 and 30. For this reason, as illustrated in a start-up procedure of FIG. 10, in the start-up procedure of Clone HeNB 200, message transmission to operator networks 20 and 30 is not performed. For this reason, it is possible to reduce processing loads of messages processed in apparatuses in operator networks 20 and 30.

Further, a message and user data on a per-UE basis can be forwarded between Clone HeNB 200 and apparatuses in an operator network in the present embodiment. Thus, each service as illustrated in Initial Context Setup procedure of FIG. 11 to FIG. 13 can be realized.

Further, operator network communication function section 110 instructs operator network proxy function section 120 to generate a message for instructing initialization and stopping of service to all Clone HeNBs 200 in the present embodiment, and thus synchronizes service states of Parent HeNB 100 and Clone HeNB 200. Thus, it is possible to achieve minimization of the interruption time of a user served by Clone HeNB 200. Further, the user served by Clone HeNB 200 can quickly know that the service is interrupted.

Further, switch setting function section 150 can enable or disable functions of operator network proxy function section 120, parameter management function section 130, and identifier conversion function section 140 in the present embodiment, so that it is possible to set whether or not a base station apparatus operates as Parent HeNB 100. This prevents preparation of unintended Clone HeNB 200. Further, it is possible to reduce power consumption by stopping unnecessary functions.

The above description is only illustrative of a preferred embodiment of the present invention, and the scope of the present invention is not limited to the embodiment.

For example, in the above embodiment, although an example is shown in which an L-GW is installed in local network 10, an EPC such as an MME, S-GW, HSS, P-GW, and HSS is installed in operator network 20, and apparatuses such as an HeMS and HeNB are installed in operator network 30, the present invention is not limited to the example, and any apparatus having the similar functions to these apparatuses can be employed.

The terms including a base station apparatus and a communication method are used in the above embodiment for convenience of explanation, but the apparatus may be a base station, and the method may be a communication control method, a method for reducing a message processing load, or a signaling reducing method, for example.

Further, the configuration components forming the above base station apparatus, for example, the types of operator network communication function section, identifier conversion processing, and the like are not limited to those mentioned in the aforementioned embodiment.

Although a case in which the present invention is configured by hardware is described as an example in the above embodiment, the present invention can be realized by software.

The functional blocks used in the descriptions of the above-noted embodiments are typically implemented by LSI devices, which are integrated circuits. These may be individually implemented as single chips and, alternatively, a part or all thereof may be implemented as a single chip. The term LSI devices as used herein, depending upon the level of integration, may refer variously to ICs, system LSI devices, very large-scale integrated devices, and ultra-LSI devices.

The method of integrated circuit implementation is not restricted to LSI devices, and implementation may be done by dedicated circuitry or a general-purpose processor. After fabrication of an LSI device, a programmable FPGA (field-programmable gate array) or a re-configurable processor that enables reconfiguration of connections of circuit cells within the LSI device or settings thereof may be used.

Additionally, in the event of the appearance of technology for integrated circuit implementation that replaces LSI technology by advancements in semiconductor technology or technologies derivative therefrom, that technology may of course be used to integrate the functional blocks. Another possibility is the application of biotechnology or the like.

The disclosure of Japanese Patent Application No. 2011-130348, filed on June 10, 2011, including the specification, drawings and abstract, is incorporated herein by reference in its entirety.

### Industrial Applicability

The base station apparatus and communication method for a base station apparatus according to the present invention are suitable for use in a configuration where a plurality of small-cell base station apparatuses are installed in a local network.

### Reference Signs List

- 10: Local network
- 20, 30: Operator network
- 26: PDN
- 100: Parent HeNB (base station apparatus)
- 110: Operator network communication function section
- 120: Operator network proxy function section
- 130: Parameter management function section
- 140: Identifier conversion function section
- 150: Switch setting function section
- 200: Clone HeNB (other base station apparatus)
- 210: Clone HeNB interface

## Claims

1. A base station apparatus provided in a local network, the apparatus comprising:
an operator network communication section that communicates with an operator network apparatus;
an operator network proxy section that performs communication as a proxy for the operator network apparatus for another base station apparatus provided in the local network; and
a parameter management section that manages parameter information used for the other base station apparatus, among parameter information acquired by the operator network communication section, wherein
the operator network proxy section generates a message on a per-apparatus basis to the other base station apparatus, using the parameter information managed by the parameter management section and transmits the message to
the other base station apparatus.

2. The base station apparatus according to claim 1, further comprising
an identifier conversion section that performs conversion of an identifier of a message and user data when communication is performed between the other base station apparatus and the operator network apparatus.

3. The base station apparatus according to claim 1, wherein the parameter management section is capable of optionally changing the parameter information.

4. The base station apparatus according to claim 1, wherein the operator network proxy section terminates transmission of a message on a per-apparatus basis among messages and user data which are received from the other base station apparatus, and when a response is requested, generates the message and transmits the message to the other base station apparatus.

5. The base station apparatus according to claim 1, wherein the operator network proxy section terminates transmission of a message of the other base station apparatus for registration to and set-up with the operator network apparatus, and does not forward the message to the operator network apparatus.

6. The base station apparatus according to claim 1, wherein the operator network proxy section is capable of optionally setting a base station apparatus allowed to provide service, and rejects service when a different base station apparatus different than the base station apparatus allowed to provide service requests service.

7. The base station apparatus according to claim 1, wherein the operator network proxy section is capable of optionally setting an installable position of a base station apparatus to be connected, and rejects service when the base station apparatus which has been connected is located at a position different from the installable position.

8. The base station apparatus according to claim 2, wherein:
the operator network proxy section forwards to the identifier conversion section, a message and user data on a per-user basis, among messages and user data received from the other base station apparatus;
the identifier conversion section converts a user identifier of the message and user data on a per-user basis, from a user identifier used between the base station apparatus and the other base station apparatus, to a user identifier used between the operator network apparatus and the base station apparatus, and then forwards the user identifier to the operator network communication section; and
the operator network communication section converts the message and user data on a per-user basis to a message and user data which are addressed to the operator network apparatus from the base station apparatus, and then transmits the message and user data to the operator network apparatus.

9. The base station apparatus according to claim 2, wherein:
the operator network communication section forwards to the identifier conversion section, a message and user data which are addressed to a user served by the other base station apparatus, among messages and user data received from the operator network apparatus;
the identifier conversion section converts a user identifier of the message and user data which are addressed to a user served by the other base station apparatus, from a user identifier used between the operator network apparatus and the base station apparatus to a user identifier used between the base station apparatus and the other base station apparatus, and then forwards the user identifier to the operator network proxy section; and
the operator network proxy section converts the message and user data which are addressed to a user served by the other base station apparatus to a message and user data which are addressed to the other base station apparatus from the base station apparatus, and then transmits the message and user data to the other base station apparatus.

10. The base station apparatus according to claim 1, wherein, upon reception of a message for instructing initialization and stopping of service of a base station apparatus from the operator network apparatus, the operator network communication section instructs the operator network proxy section to generate a message for instructing initialization and stopping of service to all other base station apparatuses.

11. The base station apparatus according to claim 1, wherein at least one of a function of the identifier conversion section, a function of the parameter management section, and a function of the operator network proxy section is switchable between enabled and disabled.

12. The base station apparatus according to claim 1, wherein the operator network proxy section communicates with the other base station apparatus, using a communication interface of a local network gateway included in the base station apparatus.

13. The base station apparatus according to claim 1, wherein the other base station apparatus communicates with the base station apparatus with regarding the base station apparatus as the operator network apparatus.

14. A communication method for a base station apparatus provided in a local network and configured to perform communication with an operator network apparatus, the method comprising:
acquiring a parameter through the communication; and
performing a proxy operation for an operator network apparatus with respect to another base station apparatus, using the parameter.
